# EUROPÄISCHE PATENTANMELDUNG

(11) **EP 1 260 707 A2**
(43) Veröffentlichungstag der Anmeldung: **27.11.2002**
(21) Anmeldenummer: 02011018.5
(22) Anmeldetag: 17.05.2002
(51) Int. Cl.: F02M 61/18, F02M 51/06

(54) **Brennstoffeinspritzventil**

(30) Priorität: 21.05.2001 DE 10124744
(71) Anmelder: ROBERT BOSCH GMBH, 70442 Stuttgart (DE)
(72) Erfinder: Ruehle, Wolfgang, 71254 Ditzingen (DE); Stilling, Joachim, 74397 Pfaffenhofen/Weiler (DE); Andorfer, Martin, 70825 Korntal-Muenchingen (DE)

(57) **Zusammenfassung**

Ein Brennstoffeinspritzventil (1) für Brennstoffeinspritzanlagen von Brennkraftmaschinen weist einen Aktor (10) auf und eine von dem Aktor (10) betätigbare Ventilnadel (3) zur Betätigung eines Ventilschließkörpers (4), der zusammen mit einer an einem Ventilsitzkörper (5) ausgebildeten Ventilsitzfläche (6) einen Dichtsitz bildet. Zumindest eine Abspritzöffnung (7) ist in dem Ventilsitzkörper (5) ausgeformt und wird von einem elastischen Vibrationselement (35) durchdrungen, das auf der Zulaufseite der Abspritzöffnung (7) befestigt ist und einen Teil des Querschnitts der Abspritzöffnung (7) freiläßt.

## Beschreibung

### Stand der Technik

Die Erfindung geht aus von einem Brennstoffeinspritzventil nach der Gattung des Hauptanspruchs.

Aus der EP 0 348 786 B1 ist ein Brennstoffeinspritzventil für eine Brennkraftmaschine mit einem Düsenkörper bekannt, der eine Querwand mit einer Innenseite und einer Außenseite aufweist, durch die ein Brennstoffweg nach außen führt und mit einer Außenkammer, die auf der Außenseite der Querwand angeordnet ist und sich zwischen der Querwand und einer Austrittsöffnung erstreckt sowie von einer zylinderförmigen Wand des Düsenkörpers begrenzt ist, wobei die zylinderförmige Wand so lang ist, daß der Brennstoffweg von Ablagerungen freigehalten wird. Das Brennstoffeinspritzventil ist für die Einspritzung von Brennstoff in ein Saugrohr der Brennkraftmaschine vorgesehen.

Nachteilig an diesem Stand der Technik ist, daß die Geometrie der Brennstoffstrahlen durch den Außenzylinder stark eingeschränkt wird und eine Anwendung des Brennstoffeinspritzventils zur direkten Brennstoffeinspritzung nur eingeschränkt möglich ist. Weiter ist nachteilig, daß im Brennraum am Ende des Verdichtungshubs das Volumen und der Einbauraum des Außenzylinders hinderlich sind, der den Brennstoffweg abschirmt. Auch kann das Durchzünden des Brennstoffgemisches im Außenzylinder nicht verhindert werden und es kommt trotz des abschirmenden Außenzylinders zu Temperaturspitzen und somit Verkokungen.

Aus der DE 198 04 463 A1 ist ein Brennstoffeinspritzsystem für eine gemischverdichtende, fremdgezündete Brennkraftmaschine bekannt, welches ein Brennstoffeinspritzventil umfaßt, das Brennstoff in einen von einer Kolben-/Zylinderkonstruktion gebildeten Brennraum einspritzt und das mit einer in den Brennraum ragenden Zündkerze versehen ist. Das Brennstoffeinspritzventil ist mit mindestens einer Reihe über den Umfang des Brennstoffeinspritzventils verteilt angeordneten Einspritzlöchern versehen. Durch eine gezielte Einspritzung von Brennstoff über die Einspritzlöcher wird eine strahlgeführtes Brennverfahren durch Bildung einer Gemischwolke mit mindestens einem Strahl realisiert.

Nachteilig an dem aus der obengenannten Druckschrift bekannten Brennstoffeinspritzventil ist, daß die Verkokung der Abspritzöffnungen nicht verhindert wird. Da das Brennstoffenspritzventil direkt in einen Brennraum einspritzt, ist es höheren Temperaturbelastungen ausgesetzt. Weiterhin sind wegen der Mehrzahl von Abspritzöffnungen die Durchmesser der Abspritzöffnungen kleiner, um kleine Einspritzmengen an Brennstoff zu erreichen. Die relative Fläche in den Abspritzbohrungen, die mit Brennstoff benetzt ist, ist größer und es kommt leichter zu Verkokungen. Dies führt zu einer Beeinträchtigung der Strahlbildung des Brennstoffs und somit der Gemischbildung.

### Vorteile der Erfindung

Das erfindungsgemäße Brennstoffeinspritzventil mit den kennzeichnenden Merkmalen des Hauptanspruchs hat demgegenüber den Vorteil, daß Verkokungen auch bei sehr kleinen Abspritzöffnungen, die beliebig orientiert sind, mechanisch entfernt werden. Das im fließenden Brennstoff in der Abspritzöffnung befindliche Vibrationselement wird durch Strömungsturbulenzen zu Schwingungen über den Raum der Abspritzöffnung angeregt, legt sich ganz oder teilweise an die Wandungen der Abspritzöffnung an und löst sich wieder. Statistisch verteilt werden somit alle Wandungsbereiche der Abspritzöffnung erreicht und Verkokungen mechanisch abgeschlagen und vom fließenden Brennstoff mitgenommen. Da das Vibrationselement aus einem elastischen Material besteht und vorrangig auf Zug belastet wird, kann es mit sehr geringen Materialstärken ausgeführt werden, die den Querschnitt der Abspritzöffnung und somit die Strahlform nur gering beeinträchtigen.

Durch die in den Unteransprüchen aufgeführten Maßnahmen sind vorteilhafte Weiterbildungen des im Hauptanspruch angegebenen Brennstoffeinspritzventils möglich.

Vorteilhafterweise ist das Vibrationselement ein Faden aus einem Metall, der in einer Ausnehmung des Ventilsitzkörpers auf der Zulaufseite der Abspritzöffnung durch einen Schweißpunkt befestigt ist.

Durch diese Ausführungsform ist in kostengünstiger Weise eine zugfestes und temperaturbeständiges Vibrationselement zu verwirklichen.

### Zeichnungen

Ausführungsbeispiele der Erfindung sind in den Zeichnungen vereinfacht dargestellt und in der nachfolgenden Beschreibung näher erläutert. Es zeigen:
- Fig. 1: einen schematischen Schnitt durch ein erstes Ausführungsbeispiel eines erfindungsgemäß ausgestalteten Brennstoffeinspritzventils und
- Fig. 2: den Ausschnitt II in der Fig. 1 in einer vergrößerten Darstellung.

### Beschreibung des Ausführungsbeispiels

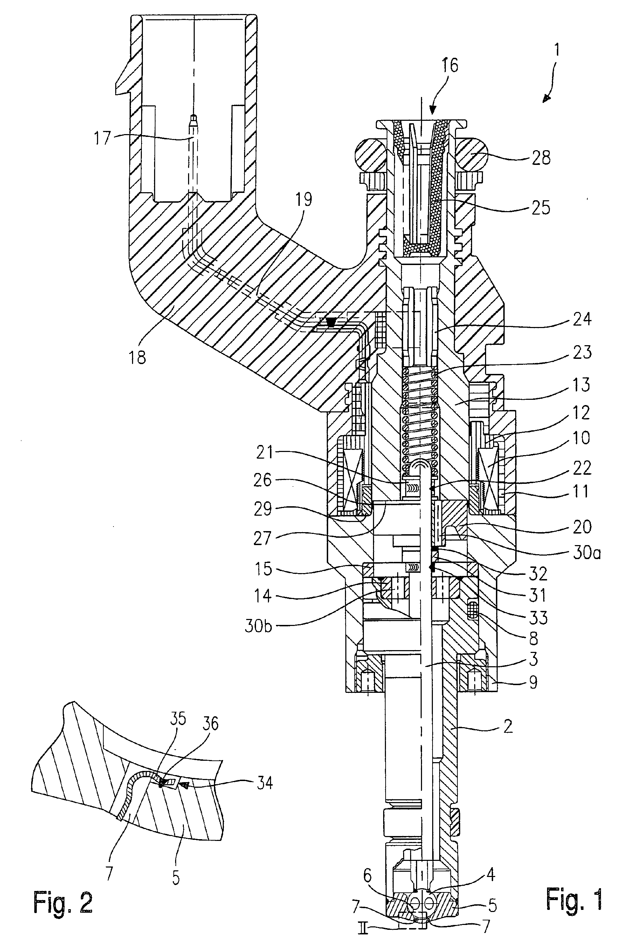

Ein in Fig. 1 dargestelltes erstes Ausführungsbeispiel eines erfindungsgemäßen Brennstoffeinspritzventils 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht mit einem Ventilschließkörper 4 in Wirkverbindung, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über mehrere in dem Ventilsitzkörper 5. ausgeformte Abspritzöffnungen 7 verfügt. Der Düsenkörper 2 ist durch eine Dichtung 8 gegen einen Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch eine Verengung 26 voneinander getrennt und miteinander durch ein nicht ferromagnetisches Verbindungsbauteil 29 verbunden. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich der Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird. In der Ventilnadelführung 14, im Anker 20 und am Ventilsitzkörper 5 verlaufen Brennstoffkanäle 30a bis 30b. Der Brennstoff wird über eine zentrale Brennstoffzufuhr 16 zugeführt und durch ein Filterelement 25 gefiltert. Das Brennstoffeinspritzventil 1 ist durch eine Dichtung 28 gegen eine nicht weiter dargestellte Brennstoffleitung abgedichtet.

An der abspritzseitigen Seite des Ankers 20 ist ein ringförmiges Dämpfungselement 32, welches aus einem Elastomerwerkstoff besteht, angeordnet. Es liegt auf einem zweiten Flansch 31 auf, welcher über eine Schweißnaht 33 kraftschlüssig mit der Ventilnadel 3 verbunden ist.

Im Ruhezustand des Brennstoffeinspritzventils 1 wird der Anker 20 von der Rückstellfeder 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den ersten Flansch 21, welcher mit der Ventilnadel 3 verschweißt ist, ebenfalls in Hubrichtung mit. Der mit der Ventilnadel 3 in Verbindung stehende Ventilschließkörper 4 hebt von der Ventilsitzfläche 6 ab, und der Brennstoff wird durch die Abspritzöffnungen 7 abgespritzt.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilhadel 3 in Verbindung stehende erste Flansch 21 entgegen der Hubrichtung bewegt. Die Ventilnadel 3 wird dadurch in die gleiche Richtung bewegt, wodurch der Ventilschließkörper 4 auf der Ventilsitzfläche 6 aufsetzt und das Brennstoffeinspritzventil 1 geschlossen wird.

Fig. 2 zeigt in einer auszugsweisen Schnittdarstellung den in Fig. 1 mit II bezeichneten Ausschnitt aus dem in Fig. 1 dargestellten Ausführungsbeispiel eines erfindungsgemäß ausgestalteten Brennstoffeinspritzventils 1.

In dem Ventilsitzkörper 5 ist die in dem Detailausschnitt vergrößert dargestellte Abspritzöffnung 7 ausgeformt. Auf einer Zulaufseite der Abspritzöffnung 7 ist in dem Ventilsitzkörper 5 eine seitliche Ausnehmung 34 ausgebildet. In dieser Ausnehmung 34 ist ein Vibrationselement in Form eines Fadens 35, der aus Metalldrähten z. B. geflochten oder gesponnen ist, mit einem Schweißpunkt 36 befestigt. Der Faden 35 ist in die Abspritzöffnung 7 eingeführt und durchdringt die Abspritzöffnung 7 vorzugsweise in voller Länge.

Wird die in Fig. 1 dargestellte Ventilnadel 3 mit dem Ventilschließkörper 4 von der Ventilsitzfläche 6 abgehoben, so fließt Brennstoff zu der Abspritzöffnung 7 und durchströmt die Abspritzöffnung 7. Der Brennstoff regt durch entstehende Turbulenzen den Faden 35 zu Pendelschwingungen an. Der Faden 35 legt sich abwechselnd an verschiedene Abschnitte der Wandung der Abspritzöffnung 7 an und schlägt an dieser Stelle eventuell vorhandene Verkokungen ab. Die Verkokungsrückstände werden von dem fließenden Brennstoff mitgenommen. Diese Bewegung des Fadens 35 ist im Bereich des brennraumseitigen Auslaufs der Abspritzöffnung 7 am ausgeprägtesten. In diesem Bereich entstehen jedoch auch am ehesten Verkokungen. Durch die Befestigung des Fadens 35 nahe dem zulaufseitigen Abschnitt der Abspritzöffnung 7 in der Ausnehmung 34 wird der Faden 35 durch den strömenden Brennstoff stets in die Abspritzöffnung 7 mitgenommen und hineingeführt, falls er aus dieser, während das Brennstoffeinspritzventil geschlossen ist, herausgleiten sollte.

Die Abspritzöffnung 7 kann anstatt in dem Ventilsitzkörper 5 auch in einer von dem Ventilsitzkörper 5 separaten Lochscheibe ausgebildet sein.

## Patentansprüche

1. Brennstoffeinspritzventil (1) für Brennstoffeinspritzanlagen von Brennkraftmaschinen mit einem Aktor (10), einer von dem Aktor (10) betätigbaren Ventilnadel (3) zur Betätigung eines Ventilschließkörpers (4), der zusammen mit einer an einem Ventilsitzkörper (5) ausgebildeten Ventilsitzfläche (6) einen Dichtsitz bildet, und mit zumindest einer Abspritzöffnung (7), die stromabwärts des Ventilsitzes (6) ausgebildet ist,
**dadurch gekennzeichnet,**
**daß** die Abspritzöffnung (7) von einem elastischen Vibrationselement (35) durchdrungen ist, das auf einer Zulaufseite der Abspritzöffnung (7) befestigt ist und einen Teil des Querschnitts der Abspritzöffnung (7) freiläßt.

2. Brennstoffeinspritzventil nach Anspruch 1, **dadurch gekennzeichnet,**
**daß** das Vibrationselement ein Faden (35) ist.

3. Brennstoffeinspritzventil nach Anspruch 2, **dadurch gekennzeichnet,**
**daß** der Faden (35) aus einem temperaturbeständigen Material besteht.

4. Brennstoffeinspritzventil nach Anspruch 2 oder 3,
**dadurch gekennzeichnet,**
**daß** der Faden (35) aus einem Metall besteht.

5. Brennstoffeinspritzventil nach Anspruch 4,
**dadurch gekennzeichnet,**
**daß** der Faden (35) in einer seitlichen Ausnehmung (34) auf der Zulaufseite der Abspritzöffnung (7) durch einen Schweißpunkt (36) befestigt ist.

6. Brennstoffeinspritzventil nach einem der vorherigen Ansprüche,
**dadurch gekennzeichnet,**
**daß** die wenigstens eine Abspritzöffnung (7) in dem Ventilsitzkörper (5) ausgebildet ist.

7. Brennstoffeinspritzventil nach einem der Ansprüche 1 bis 5,
**dadurch gekennzeichnet,**
**daß** die wenigstens eine Abspritzöffnung (7) in einer vom Ventilsitzkörper (5) separaten Lochscheibe ausgebildet ist.
